# EUROPEAN PATENT APPLICATION

(11) **EP 4 797 598 A1**
(43) Date of publication of application: **26.08.2026**
(21) Application number: 23955715.0
(22) Date of filing: 18.10.2023
(51) Int. Cl.: H04L 5/00

(54) **MEASUREMENT METHOD AND APPARATUS BASED ON ORTHOGONAL TIME FREQUENCY SPACE (OTFS) MODULATION, DEVICE, AND SYSTEM**

(71) Applicant: Beijing Xiaomi Mobile Software Co., Ltd., Beijing 100085 (CN)
(72) Inventor: ZHAO, Qun, Beijing 100085 (CN); DUAN, Gaoming, Beijing 100085 (CN)
(74) Representative: Stöckeler, Ferdinand
(86) International application number: PCT/CN2023/125260
(87) International publication number: WO 2025/081388

(57) **Abstract**

The disclosure provides a measurement method and apparatus based on orthogonal time frequency space (OTFS) modulation, a device, and a system. The measurement method based on OTFS modulation includes: a terminal receives first information, the first information being used for indicating a plurality of resource elements (REs) within a delay Doppler (DD) domain; and on the basis of the first information, performs radio resource management (RRM) measurement on a transmission reference signal. According to the method of the disclosure, RRM measurement based on OTFS modulation can be effectively achieved.

## Description

### TECHNICAL FIELD

The disclosure relates to the field of communication technologies, and in particular to a method and an apparatus for measurement based on orthogonal time frequency space (OTFS), a device and a system.

### BACKGROUND

Orthogonal time frequency space (OTFS) is provided to solve the problem of high Doppler. In an OTFS system, data may first be mapped onto two-dimensional lattice points in a delay Doppler (DD) domain, and then transformed onto two-dimensional lattice points in a time frequency (TF) domain through an inverse Symplectic finite Fourier transform (ISFFT). Further, symbols in the TF domain may be transmitted via a multi-carrier system (Heisenberg transform). For example, an orthogonal frequency division multiplexing (OFDM) system may be used for transmission. After a time domain signal of OTFS passes through an impulse response h(τ, v) (in which τ represents a delay parameter, v represents a Doppler parameter) of a time-varying channel, a receiving end first transforms a received signal into the TF domain (Wigner transform) and performs a Symplectic finite Fourier transform (SFFT) to restore the data to the DD domain. Lattice points in the DD domain and the TF domain may be collectively referred to as resource elements (REs). In the OTFS system, after the ISFFT transform, data symbols on each RE in the DD domain are spread to all REs in the TF domain, that is, the symbols equally experience frequency selectivity and time diversity of the REs in the TF domain. Thus, all data symbols in the DD domain may be well approximated as experiencing the same time-invariant channel. This property directly affects reference signal design of the OTFS system. In an ideal scenario, symbols received by the receiving end in the DD domain are equal to a two-dimensional circular convolution of symbols in the DD domain at the transmitting end with a channel h(τ, v) in the DD domain.

### SUMMARY

Embodiments of the disclosure provide a method and an apparatus for measurement based on orthogonal time frequency space (OTFS), a device, a chip system, a storage medium, a computer program and a computer program product, which may be applied to the field of communication technology, to solve the technical problem that "related technologies do not support radio resource management (RRM) measurement based on OTFS".

The disclosure provides a method and an apparatus for measurement based on OTFS, a communication device, a communication system, and a storage medium.

According to a first aspect of embodiments of the disclosure, a method for measurement based on OTFS is provided. The method is performed by a terminal, including: receiving first information, in which the first information is used to indicate a plurality of resource elements (REs) in a delay Doppler (DD) domain; and performing RRM measurement on a transmitted reference signal based on the first information.

According to a second aspect of embodiments of the disclosure, a method for measurement based on OTFS is provided. The method is performed by a network device, including: sending first information, in which the first information is used to indicate a plurality of REs in a DD domain and to perform RRM measurement on a transmitted reference signal.

According to a third aspect of embodiments of the disclosure, a method for measurement based on OTFS is provided. The method includes: sending, by a network device, first information, in which the first information is used to indicate a plurality of REs in a DD domain; and receiving, by a terminal, first information; and performing, by a terminal, RRM measurement on a transmitted reference signal based on the first information.

According to a fourth aspect of embodiments of the disclosure, an apparatus for measurement based on OTFS is provided. The apparatus includes: a transceiver module, configured to receive first information, in which the first information is used to indicate a plurality of REs in a DD domain; and a processing module, configured to perform RRM measurement on a transmitted reference signal based on the first information.

According to a fifth aspect of embodiments of the disclosure, an apparatus for measurement based on OTFS is provided. The apparatus includes: a transceiver module, configured to send first information, in which the first information is used to indicate a plurality of REs in a DD domain and to perform RRM measurement on a transmitted reference signal.

According to a sixth aspect of the embodiments of the disclosure, a communication device is provided. The communication device includes: one or more processors, in which the one or more processors are configured to invoke instructions to cause the communication device to perform the method for measurement based on OTFS according to any one of the first aspect, the second aspect or the third aspect.

According to a seventh aspect of the embodiments of the disclosure, a communication system is provided. The communication system includes a terminal, configured to perform the method for measurement based on OTFS according to the first aspect, and a network device, configured to perform the method for measurement based on OTFS according to the second aspect.

According to an eighth aspect of the embodiments of the disclosure, a storage medium is provided. The storage medium stores instructions, in which the instructions, when executed on a communication device, cause the communication device to perform the method for measurement based on OTFS according to any one of the first aspect, the second aspect or the third aspect.

### BRIEF DESCRIPTION OF THE DRAWINGS

In order to explain technical solutions in the embodiments of the disclosure or the related art more clearly, the accompanying drawings described in the embodiments of the disclosure or required in the related art will be briefly introduced below.
FIG. 1 is a schematic diagram illustrating an architecture of a communication system according to an embodiment of the disclosure.
FIG. 2 is a schematic diagram illustrating a guard interval in a delay Doppler (DD) domain according to an embodiment of the disclosure.
FIG. 3A is a flowchart illustrating an interaction of a method for measurement based on orthogonal time frequency space (OTFS) according to an embodiment of the disclosure.
FIG. 3B is a flowchart illustrating an interaction of a method for measurement based on OTFS according to another embodiment of the disclosure.
FIG. 4 is a schematic diagram illustrating REs for measuring received signal strength indicator (RSSI) according to an embodiment of the disclosure.
FIG. 5A is a flowchart illustrating an interaction of a method for measurement based on OTFS according to another embodiment of the disclosure.
FIG. 5B is a flowchart illustrating an interaction of a method for measurement based on OTFS according to another embodiment of the disclosure.
FIG. 5C is a flowchart illustrating an interaction of a method for measurement based on OTFS according to yet another embodiment of the disclosure.
FIG. 5D is a flowchart illustrating an interaction of a method for measurement based on OTFS according to yet another embodiment of the disclosure.
FIG. 5E is a flowchart illustrating an interaction of a method for measurement based on OTFS according to yet another embodiment of the disclosure.
FIG. 6 is a flowchart illustrating an interaction of a method for measurement based on OTFS according to yet another embodiment of the disclosure.
FIG. 7 is a flowchart illustrating an interaction of a method for measurement based on OTFS according to yet another embodiment of the disclosure.
FIG. 8A is a block diagram illustrating an apparatus for measurement based on OTFS according to an embodiment of the disclosure.
FIG. 8B is a block diagram illustrating an apparatus for measurement based on OTFS according to an embodiment of the disclosure.
FIG. 9A is a block diagram illustrating a communication device according to an embodiment of the disclosure.
FIG. 9B is a block diagram illustrating a chip according to an embodiment of the disclosure.

### DETAILED DESCRIPTION

Embodiments of the disclosure provide a method and an apparatus for measurement based on orthogonal time frequency space (OTFS), a communication device, a communication system, and a storage medium. In some embodiments, terms such as "method for measurement based on OTFS", "method for information processing", and "communication method" may be used interchangeably; terms such as "apparatus for measurement based on OTFS", "apparatus for information processing", and "communication apparatus" may be used interchangeably; and terms such as "system for information processing", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In embodiments of the disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing A and B, that is, in some embodiments, A and B are executed. The same applies similarly when there are more branches such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, acquisition of data, information, etc. may comply with laws and regulations of the country to which the data is obtained.

In some embodiments, the data, the information, etc. may be obtained with consent from users.

In addition, each element, each row, or each column in a table of the embodiments of the disclosure may be implemented as an independent embodiment, and the combination of any elements, any rows, or any columns may also be implemented as an independent embodiment.

The correspondences shown in tables in this disclosure may be configured or may be predefined. Values of information in the tables are merely examples and may be configured to other values, which are not limited by the disclosure. When configuring the correspondence between the information and parameters, it is not necessarily required that all the correspondence illustrated in the tables must be configured. For example, the correspondences illustrated in certain rows in the tables in this disclosure may not be configured. For another example, the above tables may be adjusted appropriately, such as splitting, combining, and the like. Names of the parameters shown in titles of the tables may be other names that can be understood by the communication device, and the values or representations of the parameters may be other values or representations that can be understood by the communication device. Each of the tables may also be implemented with other data structures, such as, arrays, queues, containers, stacks, linear tables, pointers, chained lists, trees, graphs, structures, classes, heaps, Hash tables, and the like.

The term "predefined" in this disclosure may be understood as defined, pre-defined, stored, pre-stored, pre-negotiated, pre-configured, solidified, or pre- burned.

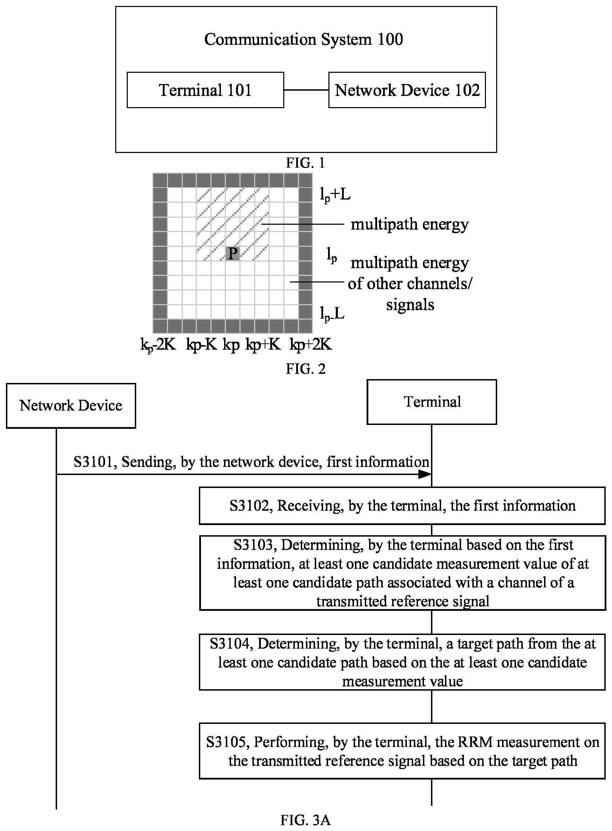

FIG. 1 is a schematic diagram illustrating an architecture of a communication system according to an embodiment of the disclosure. As shown in FIG. 1, the communication system 100 may include a terminal 101 and a network device 102. The network device 102 includes at least one of: an access network device, or a core network device.

In some embodiments, the terminal 101 may include at least one of a mobile phone, a wearable device, an Internet of Things device, a car with a communication function, a smart car, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open radio access network (Open RAN) base station, a Cloud RAN base station, a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may be composed of a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be a device including one or more network elements, or may be a plurality of devices or device groups, each including all or part of one or more network elements. The network elements may be virtual or physical. The core network may include, for example, at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. Those skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new-radio access technology (RAT), new radio (NR), new radio access (NX), future generation radio access (FX), a global system for mobile communications (GSM^{®}), CDMA2000, ultra mobile broadband (UMB), IEEE 802.11 (Wi-Fi^{®}), IEEE 802.16 (WiMAX^{®}), IEEE 802.20, Ultra-WideBand (UWB), Bluetooth^{®}, a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, a plurality of systems may also be combined (for example, a combination of LTE or LTE-A and 5G, etc.) for application.

Optionally, in an OTFS system, due to its two-dimensional circular convolution characteristic in a delay Doppler (DD) domain, at a receiving end, any symbol in the DD domain is spread to a plurality of resource elements (REs) in the DD domain. Thus, it is necessary to perform radio resource management (RRM) measurement based on OTFS.

In an embodiment of the disclosure, in the OTFS system, considering that when a reference signal is transmitted via a plurality of paths based on a channel h(τ, v), energy of the reference signal is dispersed onto the plurality of paths of the channel, by collecting the multipath energy, a more accurate measurement result may be obtained, thus supporting effective radio resource management.

Optionally, due to the two-dimensional circular convolution characteristic of OTFS in the DD domain, any data symbol in the DD domain is spread onto a plurality of REs in the DD domain. Specifically, assuming that the channel h(τ, v) includes Q paths (each path may have a different delay and/or Doppler), each data symbol in the DD domain is spread onto P (P may be greater than or equal to Q) REs in the DD domain. A value range of delay of each path is [0, τₘₐₓ], and a value range of Doppler shift of each path is [-νₘₐₓ, νₘₐₓ], in which τₘₐₓ is a maximum delay and νₘₐₓ is a maximum Doppler shift. On one hand, for a data symbol in the DD domain, energy spread onto the P paths may be collected, thus improving reception performance of the data symbol in the DD domain. On the other hand, for a data symbol in the DD domain, if the P REs in the DD domain onto which it is spread are allocated to other channels, interference between channels is caused. To eliminate an influence of the two-dimensional circular convolution characteristic, a guard interval may be inserted between different channels and/or signals. The REs in the DD domain occupied by the guard interval are not used to carry signals, or in other words, carry symbols of 0.

Optionally, as shown in FIG. 2, FIG. 2 is a schematic diagram illustrating a guard interval in a DD domain according to an embodiment of the disclosure. In FIG. 2, a reference signal (RS) to be protected is represented by P, located at RE(lₚ, kₚ). One square in FIG. 2 may represent one or more REs in the DD domain. L and 2K are respectively numbers of single-sided sample points of the guard interval in a delay dimension and a Doppler dimension. When configuring the guard interval around the RS, two aspects may be considered. On one hand, for one RS symbol, energy spread to paths (represented by hatched squares in FIG. 2) in the guard interval is collected to improve reception performance. On the other hand, the configured guard interval may prevent multipath of other channels, at least relatively strong paths (white squares in FIG. 2), from interfering with reception of the RS. Other terminals may also collect energy of their multipath in these guard intervals (white squares in FIG. 2).

FIG. 3A is a flowchart illustrating an interaction of a method for measurement based on OTFS according to an embodiment of the disclosure. As shown in FIG. 3A, embodiments of the disclosure relate to a method for measurement based on OTFS, which may be used in the communication system 100. The method includes the following steps S3101 to S3105.

At step S3101, a network device sends first information.

The first information is used to indicate a plurality of REs in a DD domain and to perform RRM measurement on a transmitted reference signal.

In some embodiments, the network device may send the first information to a terminal to indicate the plurality of REs in the DD domain, and the plurality of REs may be used by the terminal to perform the RRM measurement on the transmitted reference signal. The reference signal may be transmitted by the network device to the terminal. Based on OTFS, when transmitting the reference signal, the network device modulates data symbols of the reference signal to the DD domain for transmission, and thus the reference signal occupies one or more REs in the DD domain. As shown in FIG. 2 above, the one or more REs occupied by the reference signal may be represented by one square in FIG. 2, for example, may be represented by P in FIG. 2. Thus, the plurality of REs may be REs in the DD domain in FIG. 2.

In some embodiments, the network device indicates the plurality of REs in the DD domain to the terminal, and the terminal may collect multipath energy on the plurality of REs indicated by the network device, so as to perform the RRM measurement on the transmitted reference signal.

In some embodiments, the REs may include at least one of an RE occupied by the reference signal, or an RE for receiving multipath energy of the reference signal in a guard interval of the reference signal, so that the multipath energy of the reference signal spread onto the guard interval may be effectively collected, thus supporting improvement of accuracy of the RRM measurement.

For example, as shown in FIG. 2, the REs may be one or more REs in a square represented by P in FIG. 2, and/or one or more squares represented by dashed lines.

In some embodiments, for an RS, since a guard interval is added around the RS, the RS may be power boosted. When the multipath energy of the reference signal spread onto the guard interval is collected to perform the RRM measurement, accuracy of the RRM measurement based on the RS may be effectively improved.

For example, an energy per resource element (EPRE) of the RS is boosted by S times relative to a reference channel and/or a signal, in which S is a power boosting factor. The reference channel and/or the signal may be a secondary synchronization signal (SSS), a demodulation reference signal (DMRS) of a physical broadcast channel (PBCH), or a data part of a PBCH. The reference channel and/or signal may also generally refer to a data portion of a physical downlink shared channel (PDSCH).

At step S3102, the terminal receives the first information.

In some embodiments, the terminal may receive the first information sent by the network device, and determine, based on the first information, the plurality of REs indicated by the network device.

In the embodiment, the terminal may measure, based on at least one of the RE occupied by the reference signal or the RE for receiving the multipath energy of the reference signal in the guard interval of the reference signal, parameters such as reference signal receiving power (RSRP), layer 1 reference signal receiving power (L1-RSRP), and layer 1 signal to interference plus noise ratio (L1-SINR), in which the RSRP, the L1-RSRP, and the L1-SINR may represent measurement results of performing the RRM measurement on the transmitted reference signal.

At step S3103, the terminal determines, based on the first information, at least one candidate measurement value of at least one candidate path associated with a channel of the transmitted reference signal.

In some embodiments, after receiving the first information, the terminal may measure, based on at least one of the RE occupied by the reference signal or the RE for receiving the multipath energy of the reference signal in the guard interval of the reference signal, candidate measurement values of each candidate path associated with the channel of the transmitted reference signal, and the candidate measurement values may be used to determine a measurement result of performing the RRM measurement on the transmitted reference signal.

In some embodiments, the channel of the transmitted reference signal may include a plurality of paths, and the terminal may also determine, based on a certain criterion, whether each path is suitable for determining parameters such as the RSRP, the L1-RSRP, and the L1-SINR. For example, the terminal may determine, with reference to a candidate measurement value obtained by measuring each candidate path, whether a corresponding candidate path is suitable for determining parameters such as the RSRP, the L1-RSRP, the L1-SINR, and the like.

In some embodiments, a candidate measurement value may be, for example, a channel gain or a channel energy measured for the candidate path.

At step S3104, the terminal determines a target path from the at least one candidate path based on the at least one candidate measurement value.

In some embodiments, the terminal may determine, with reference to each candidate measurement value, whether a corresponding candidate path may be used as the target path, in which the target path refers to a candidate path suitable for performing the RRM measurement on the transmitted reference signal.

In some embodiments, in a case that a candidate measurement value is greater than or equal to a measurement value threshold, a candidate path to which the candidate measurement value belongs is determined as the target path, thus improving accuracy of target path selection, so that a selected target path may effectively support performing the RRM measurement.

In some embodiments, the measurement value threshold is a threshold value of a candidate measurement value for determining that a candidate path is suitable for performing the RRM measurement on the transmitted reference signal, and the measurement value threshold may be pre-configured or predefined. For example, each candidate measurement value may be compared with the measurement value threshold, and if the candidate measurement value is greater than or equal to the measurement value threshold, a candidate path to which the candidate measurement value belongs is determined as the target path.

In some embodiments, if a plurality of candidate measurement values exist, the plurality of candidate measurement values may be sorted in descending order, a target number of candidate measurement values ranked first may be selected from a plurality of sorted candidate measurement values, and a candidate path to which each of the target number of candidate measurement values belongs may be determined as the target path, thus improving accuracy and flexibility of target path selection, so that a selected target number of target paths may effectively support performing the RRM measurement.

In some embodiments, the target number may be predefined or pre-configured. For example, the target number of candidate measurement values that are stronger may be selected from the plurality of candidate measurement values, and a target number of candidate paths respectively corresponding to the stronger target number of candidate measurement values may be determined as the target paths.

In some embodiments, at least one of the plurality of candidate measurement values is greater than or equal to the measurement value threshold, thus ensuring that the selected target path supports accurate RRM measurement.

In some embodiments, a portion of candidate paths with candidate measurement values greater than or equal to the measurement value threshold may be first selected from the plurality of candidate measurement values, and then a target number of candidate measurement values ranked first may be selected from the portion of candidate paths with candidate measurement values greater than or equal to the measurement value threshold, and a candidate path to which each of the target number of candidate measurement values belongs may be determined as the target path.

In some embodiments, a portion of candidate paths that are ranked first in the plurality of candidate measurement values and have candidate measurement values greater than or equal to the measurement value threshold may be selected as the target paths.

The target path may also be selected from the plurality of candidate measurement values in any other possible manner with reference to the measurement value threshold and/or the target number, which is not limited herein.

In some embodiments, the terminal may determine the measurement value threshold based on its own capability. Alternatively, the terminal may also receive second information, and determine the measurement value threshold based on the second information. The second information may be sent by the network device to the terminal, that is, the measurement value threshold is indicated by the network device to the terminal, so that the terminal may effectively and timely obtain an appropriate measurement value threshold to support determining the target path from the at least one candidate path.

In some embodiments, the second information may be specifically used to indicate a multiple of the measurement value threshold relative to a reference measurement value. After receiving the second information, the terminal may obtain the multiple from the second information, and determine the measurement value threshold based on the reference measurement value and the multiple. For example, the reference measurement value may be, for example, a noise standard deviation, which may be denoted as σ, then the measurement value threshold may be denoted as cσ, and a base station may configure a parameter c for channel measurement by a UE, in which c may be an optional example of the multiple.

In some embodiments, in a case that the number of candidate measurement values is greater than the target number, the plurality of candidate measurement values may be sorted in descending order, and a target number of candidate measurement values ranked first may be selected from a plurality of sorted candidate measurement values, so as to support selecting the target path from the plurality of candidate measurement values in an optimal manner. If it is determined that the number of candidate measurement values is less than or equal to the target number, a candidate path to which each candidate measurement value belongs may be determined as the target path, thus effectively adapting to personalized communication scenarios, and effectively improving flexibility of performing the RRM measurement based on OTFS.

In some embodiments, the terminal may determine the target number according to its own capability. Alternatively, the terminal may also receive third information, and determine the target number based on the third information. The third information may be sent by the network device to the terminal, that is, the target number is indicated by the network device to the terminal, so that the terminal may effectively and timely obtain an appropriate target number to support determining the target path from the at least one candidate path.

In some embodiments, the terminal may determine a sum value A of a plurality of candidate measurement values that exceed the measurement value threshold, determine a product value A * Y% of the sum value A and a target proportion value Y%, sort the plurality of candidate measurement values in descending order, and select a portion of candidate measurement values ranked first from the plurality of sorted candidate measurement values, in which a sum value of the portion of candidate measurement values is greater than or equal to the product value A * Y%; and determine a candidate path to which each candidate measurement value in the portion of candidate measurement values belongs as the target path. Thus, accuracy and flexibility of target path selection may be improved, so that the selected target paths may effectively support performing the RRM measurement.

For example, taking the plurality of candidate measurement values including candidate measurement value 1, candidate measurement value 2, candidate measurement value 3, and candidate measurement value 4 as an example, a sum value A of the candidate measurement value 1, the candidate measurement value 2, the candidate measurement value 3, and the candidate measurement value 4 may be first determined, that is, obtained by summing the candidate measurement value 1, the candidate measurement value 2, the candidate measurement value 3, and the candidate measurement value 4. Then, assuming that a preset or predefined target proportion value is Y%, a product of the sum value A and the target proportion value Y% is calculated to obtain a product value A * Y%, in which "*" denotes multiplication. Then, the plurality of candidate measurement values may be sorted in descending order, and a portion of candidate measurement values ranked first may be selected from the plurality of sorted candidate measurement values, and a sum value of the portion of candidate measurement values is greater than or equal to the product value A * Y%. Further, a candidate path to which each candidate measurement value in the portion of candidate measurement values (for example, the candidate measurement value 2, the candidate measurement value 3, and the candidate measurement value 4) belongs is determined as the target path.

In some embodiments, the target proportion value may be predefined or pre-configured.

In some embodiments, the terminal may determine a predefined target proportion value. Alternatively, the terminal may determine the target proportion value based on fourth information. In some embodiments, the terminal may also receive the fourth information, and determine the target proportion value based on the fourth information. The fourth information may be sent by the network device to the terminal, that is, the target proportion value is indicated by the network device to the terminal. Thus, the terminal may effectively and timely obtain an appropriate target proportion value to support determining the target path from the at least one candidate path.

At step S3105, the terminal performs the RRM measurement on the transmitted reference signal based on the target path.

In some embodiments, after determining the target path from the at least one candidate path in the above steps, the terminal may perform the RRM measurement on the transmitted reference signal based on one or more target paths.

In some embodiments, the terminal may determine a plurality of target paths and a plurality of target measurement values corresponding to the plurality of target paths, and determine, based on the plurality of target measurement values, a measurement result of performing the RRM measurement on the transmitted reference signal. A measurement value corresponding to the target path may be referred to as a target measurement value, and the target measurement value may be, for example, a channel gain or a channel energy.

In some embodiments, the terminal may determine, based on at least one of the RE occupied by the reference signal or the RE for receiving the multipath energy of the reference signal in the guard interval of the reference signal, the target measurement value corresponding to each target path, and determine, based on the plurality of target measurement values, parameters such as the RSRP, the L1-RSRP, and the L1-SINR to represent the measurement result of performing the RRM measurement on the transmitted reference signal.

In some embodiments, the target measurement value is a channel gain or a channel energy.

In some embodiments, each target path corresponds to one channel gain. Then, for the plurality of target paths, operations may be performed on a plurality of channel gains respectively corresponding to the plurality of target paths to determine a sum energy and/or an average energy of the plurality of target paths and/or a proportional energy between the sum energy and a power boosting factor, and the sum energy and/or the average energy and/or the proportional energy is determined as the measurement result.

In some embodiments, performing operations on the plurality of channel gains respectively corresponding to the plurality of target paths may determine the sum energy of the plurality of target paths, or may determine the average energy of the plurality of target paths, or may determine the proportional energy between the sum energy of the plurality of target paths and the power boosting factor, or may determine the sum energy, the average energy, and the proportional energy between the sum energy and the power boosting factor of the plurality of target paths, etc.

Thus, based on the plurality of channel gains or the plurality of channel energies respectively corresponding to the plurality of target paths, the sum energy and/or the average energy of the plurality of target paths and/or the proportional energy between the sum energy and the power boosting factor may be obtained by operation to represent the measurement result of the RRM measurement, which may improve accuracy and flexibility of the RRM measurement, and effectively adapt to personalized OTFS scenarios.

In some embodiments, the power boosting factor may be denoted as S, which may indicate that an energy per resource element (EPRE) of the RS is boosted by S times relative to a reference channel and/or signal.

In some embodiments, the power boosting factor is determined based on at least one of: configuration via a broadcast signaling; configuration via a radio resource control (RRC) signaling; or a number of REs occupied by the reference signal and a number of REs for receiving multipath energy of the reference signal in a guard interval of the reference signal. The power boosting factor may be accurately determined to support accurate calculation of the measurement result of the RRM measurement.

In some embodiments, to further improve accuracy of the RRM measurement, the network device may send a plurality of reference signals, and the terminal may perform the RRM measurement based on the plurality of reference signals.

In some embodiments, the plurality of reference signals may be grouped. For example, a group including one or more reference signals may be referred to as a signal group, and a plurality of signal groups may be set, and the RRM measurement may be performed based on the plurality of signal groups. The numbers of the plurality of candidate paths corresponding to each signal group may be the same or different. In addition, at least one target path may be determined for each signal group based on the above method of determining the target path from the plurality of candidate paths, and numbers of at least one target path corresponding to different signal groups may be the same or different, which may be specifically configured based on requirements of an actual communication scenario, thus effectively improving accuracy and flexibility of the RRM measurement.

In some embodiments, a plurality of reference signals exist, and different reference signals belong to the same signal group or different signal groups. A number of signal groups is greater than 1, each of the signal groups corresponds to a plurality of target paths, and numbers of target paths corresponding to different signal groups are the same or different.

In some embodiments, if a plurality of signal groups are configured, each signal group corresponds to a plurality of target paths, and the RRM measurement may be performed on the transmitted reference signal based on the plurality of target paths corresponding to each signal group, so as to support effective execution of the RRM measurement.

In some embodiments, the terminal may determine a target measurement value of each target path corresponding to each signal group, determine a group measurement result of a corresponding signal group based on a plurality of target measurement values, and determine, based on a plurality of group measurement results, a measurement result of performing the RRM measurement on the transmitted reference signal. Thus, the measurement result of performing the RRM measurement on the transmitted reference signal may be accurately and effectively determined.

For example, if each signal group corresponds to a plurality of target paths, a target measurement value is obtained by measuring each target path in advance, and the target measurement value may be, for example, a channel gain. A measurement result corresponding to signal group A may be first determined based on the plurality of target measurement values of the signal group A, and the measurement result may be referred to as a group measurement result. A group measurement result corresponding to signal group B may be determined based on the plurality of target measurement values of the signal group B, and so on, to determine a group measurement result corresponding to each signal group. After obtaining the plurality of group measurement results, corresponding processing may be performed on the plurality of group measurement results to obtain a measurement result of performing the RRM measurement on the transmitted reference signal.

In some embodiments, to improve flexibility and practicability of performing the RRM measurement on the transmitted reference signal, another manner of performing the RRM measurement in combination with a plurality of signal groups may be provided. The terminal may determine, based on target measurement values of the same target path among the plurality of signal groups, an intermediate measurement result corresponding to the same target path, and determine, based on a plurality of intermediate measurement results, a measurement result of performing the RRM measurement on the transmitted reference signal.

Each signal group may correspond to at least one target path, and thus different signal groups may include the same target path.

For example: signal group A includes target path 1, target path 2, and target path 3; signal group B includes the target path 2, the target path 3, and target path 5. Then, the target path 2 and the target path 3 are the same target paths between the signal group A and the signal group B.

For another example: the signal group A includes the target path 1 and the target path 2; the signal group B includes the target path 1 and the target path 2. Then, the signal group A and the signal group B include the same multipath, and the target path 1 and the target path 2 are the same target paths between the signal group A and the signal group B.

For the above examples, the plurality of signal groups may be analyzed, and a plurality of same target paths falling into this situation may be determined. In addition, the same target path may belong to different signal groups at the same time, and the same target path may correspond to different target measurement values for different signal groups.

For example, the target path 2 belongs to the signal group A and the signal group B at the same time. In the signal group A, a target measurement value of the target path 2 is A2, and in the signal group B, the target measurement value of the target path 2 is B2. Then, operations may be performed on the plurality of target measurement values corresponding to the same target path, and a result obtained by the operation may be used as an intermediate measurement result of the same target path.

Thus, if a plurality of same target paths exist, each same target path may correspond to an intermediate measurement result, and further, a measurement result of performing the RRM measurement on the transmitted reference signal may be determined based on the plurality of intermediate measurement results.

In some embodiments, the target measurement value is a channel gain.

In some embodiments, the terminal may determine a plurality of channel gains corresponding to each same target path, obtain an average channel gain by performing averaging processing on the plurality of channel gains, and determine the average channel gain as the intermediate measurement result. Then, the measurement result of performing the RRM measurement on the transmitted reference signal may be determined based on a plurality of average channel gains.

The method for measurement based on OTFS in embodiments of the disclosure may include at least one of steps S3101 to S3105. For example, the step S3101 may be performed as an independent embodiment; and the step S3102 may be performed as an independent embodiment, which is not limited herein. The step S3101 and the step S3102 may be performed as an independent embodiment; and the step S3101, the step S3102 and the step S3103 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

Thus, in this embodiment, the network device sends the first information, and the terminal determines, based on the first information, the at least one candidate measurement value of the at least one candidate path associated with the channel of the transmitted reference signal, determines the target path from the at least one candidate path based on the at least one candidate measurement value, and performs RRM measurement on the transmitted reference signal based on the target path, thus effectively implementing RRM measurement based on OTFS.

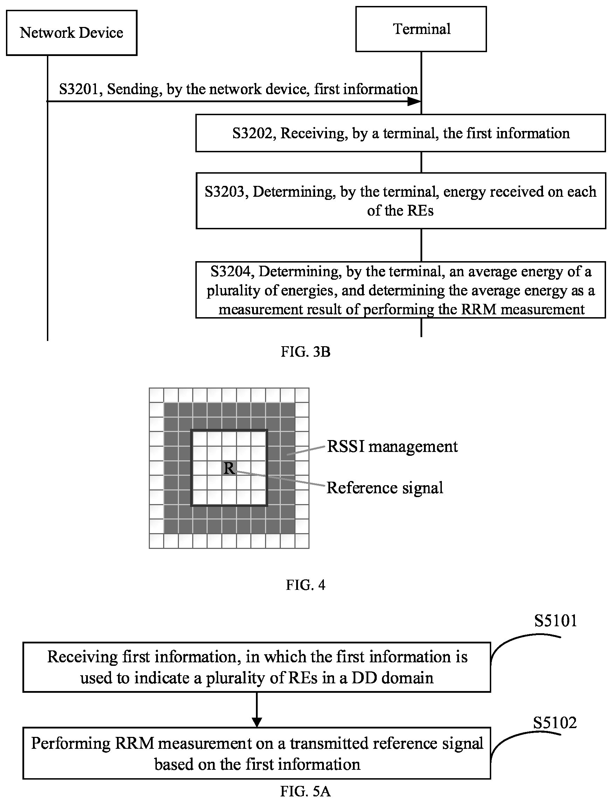

FIG. 3B is a flowchart illustrating an interaction of a method for measurement based on OTFS according to another embodiment of the disclosure. As shown in FIG. 3B, embodiments of the disclosure relate to a method for measurement based on OTFS, which may be used in the communication system 100. The method includes the following steps S3201 to S3204.

At step S3201, a network device sends first information.

In this embodiment, a terminal may measure a received signal strength indicator (RSSI), and use the measured RSSI as a measurement result of RRM measurement.

The first information is used to indicate a plurality of REs in a DD domain.

In some embodiments, in the case of measuring the RSSI, the REs indicated by the network device may include at least one of: a semi-statically configured RE, all REs in the DD domain, an RE occupied by the reference signal, all REs in the DD domain located outside a guard interval, an RE located outside a guard interval and adjacent to an RE included in the guard interval, or an RE for receiving multipath energy of the reference signal in a guard interval of the reference signal, thus effectively improving accuracy of RSSI measurement to accurately represent the measurement result of the RRM measurement.

In some embodiments, the semi-statically configured RE may be configured by the network device. The semi-statically configured RE may be, for example, one or more REs in the DD domain as shown in FIG. 4. The semi-statically configured RE and other REs may be overlapping REs or non-overlapping REs, and the other REs include at least one of: an RE occupied by the reference signal, all REs in the DD domain located outside the guard interval, an RE located outside the guard interval and adjacent to an RE included in the guard interval, or an RE for receiving multipath energy of the reference signal in the guard interval of the reference signal. When the network device configures the semi-statically configured RE for the terminal, the terminal may directly determine the semi-statically configured REs from the DD domain based on the configuration of the network device.

As shown in FIG. 4, FIG. 4 is a schematic diagram illustrating REs for measuring RSSI according to an embodiment of the disclosure. FIG. 4 is a schematic diagram illustrating a manner of measuring RSSI using REs located outside and adjacent to a guard interval of an RS. In FIG. 4, REs marked by gray squares are generally allocated to other data or control channels, and thus energy on the REs may better reflect signal strengths from a current cell and neighboring cells.

At step S3202, a terminal receives the first information.

At step S3203, the terminal determines energy received on each of the REs.

In some embodiments, referring to FIG. 4 above, the terminal may determine the energy received on each of the REs marked by gray squares as shown in FIG. 4, and determine a measurement result of the RRM measurement based on the energy received on the plurality of REs.

It should be noted that, in this embodiment, the energy received by the terminal on each RE may be a channel energy of the transmitted reference signal, or may be energy spread by other channels and/or signals, which is not limited herein.

At step S3204, the terminal determines an average energy of a plurality of energies, and determines the average energy as the measurement result of the RRM measurement.

In some embodiments, the terminal determines the energy received on each of the REs, obtains the average energy by performing averaging processing on the plurality of energies, and determines the average energy as the measurement result of performing the RRM measurement.

The method for measurement based on OTFS in embodiments of the disclosure may include at least one of steps S3201 to S3204. For example, the step S3201 may be performed as an independent embodiment; and the step S3202 may be performed as an independent embodiment, which is not limited herein. The step S3201 and the step S3202 may be performed as an independent embodiment; and the step S3201, the step S3202 and the step S3203 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

Thus, in this embodiment, the network device sends the first information; the terminal receives the first information; determines energy received on each of the REs; determines the average energy of the plurality of energies, and determines the average energy as the measurement result of the RRM measurement, thus effectively implementing RRM measurement based on OTFS.

FIG. 5A is a flowchart illustrating an interaction of a method for measurement based on OTFS according to another embodiment of the disclosure. As shown in FIG. 5A, embodiments of the disclosure relate to a method for measurement based on OTFS, which may be performed by a terminal. The method includes the following steps S5101 to S5102.

At step S5101, first information is received, in which the first information is used to indicate a plurality of REs in a DD domain.

At step S5102, RRM measurement is performed on a transmitted reference signal based on the first information.

The method for measurement based on OTFS in embodiments of the disclosure may include at least one of steps S5101 to S5102. For example, the step S5101 may be performed as an independent embodiment; and the step S5102 may be performed as an independent embodiment, which is not limited herein. The step S5101 and the step S5102 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

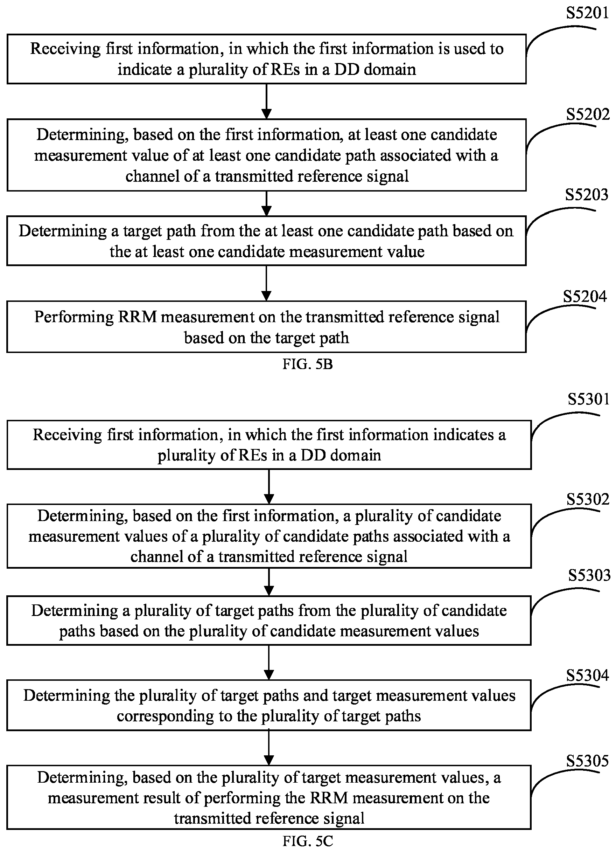

FIG. 5B is a flowchart illustrating an interaction of a method for measurement based on OTFS according to another embodiment of the disclosure. As shown in FIG. 5B, embodiments of the disclosure relate to a method for measurement based on OTFS, which may be performed by a terminal. The method includes the following steps S5201 to S5204.

At step S5201, first information is received, in which the first information is used to indicate a plurality of REs in a DD domain.

At step S5202, at least one candidate measurement value of at least one candidate path associated with a channel of the transmitted reference signal is determined based on the first information.

At step S5203, a target path is determined from the at least one candidate path based on the at least one candidate measurement value.

At step S5204, the RRM measurement is performed on the transmitted reference signal based on the target path.

The method for measurement based on OTFS in embodiments of the disclosure may include at least one of steps S5201 to S5204. For example, the step S5201 may be performed as an independent embodiment; and the step S5202 may be performed as an independent embodiment, which is not limited herein. The step S5201 and the step S5202 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

FIG. 5C is a flowchart illustrating an interaction of a method for measurement based on OTFS according to another embodiment of the disclosure. As shown in FIG. 5C, embodiments of the disclosure relate to a method for measurement based on OTFS, which may be performed by a terminal. The method includes the following steps S5301 to S5305.

At step S5301, first information is received, in which the first information is used to indicate a plurality of REs in a DD domain.

At step S5302, a plurality of candidate measurement values of a plurality of candidate paths associated with a channel of a transmitted reference signal are determined based on the first information.

At step S5303, a target path is determined from the plurality of candidate paths based on the plurality of candidate measurement values.

At step S5304, the plurality of target paths and target measurement values corresponding to the plurality of target paths are determined.

At step S5305, a measurement result of performing the RRM measurement on the transmitted reference signal is determined based on the plurality of target measurement values.

The method for measurement based on OTFS in embodiments of the disclosure may include at least one of steps S5301 to S5305. For example, the step S5301 may be performed as an independent embodiment; and the step S5302 may be performed as an independent embodiment, which is not limited herein. The step S5301 and the step S5302 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

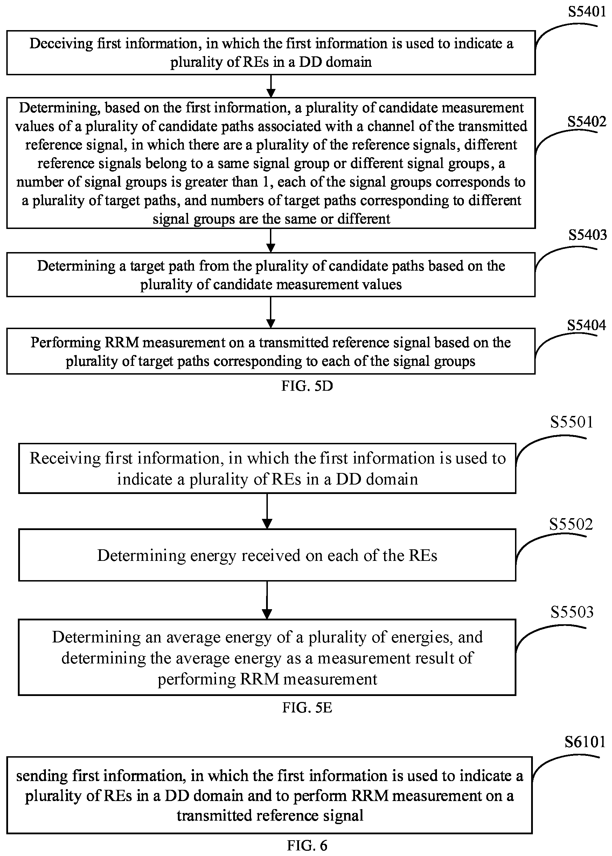

FIG. 5D is a flowchart illustrating an interaction of a method for measurement based on OTFS according to another embodiment of the disclosure. As shown in FIG. 5D, embodiments of the disclosure relate to a method for measurement based on OTFS, which may be performed by a terminal. The method includes the following steps S5401 to S5404.

At step S5401, first information is received, in which the first information is used to indicate a plurality of REs in a DD domain.

At step S5402, a plurality of candidate measurement values of a plurality of candidate paths associated with a channel of a transmitted reference signal are determined based on the first information, in which a plurality of reference signals exist, different reference signals belong to the same signal group or different signal groups, a number of signal groups is greater than 1, each of the signal groups corresponds to a plurality of target paths, and numbers of target paths corresponding to different signal groups are the same or different.

At step S5403, a target path is determined from the plurality of candidate paths based on the plurality of candidate measurement values.

At step S5404, the RRM measurement is performed on the transmitted reference signal based on the plurality of target paths corresponding to each of the signal groups.

The method for measurement based on OTFS in embodiments of the disclosure may include at least one of steps S5401 to S5404. For example, the step S5401 may be performed as an independent embodiment; and the step S5402 may be performed as an independent embodiment, which is not limited herein. The step S5401 and the step S5402 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

FIG. 5E is a flowchart illustrating an interaction of a method for measurement based on OTFS according to another embodiment of the disclosure. As shown in FIG. 5E, embodiments of the disclosure relate to a method for measurement based on OTFS, which may be performed by a terminal. The method includes the following steps S5501 to S5503.

At step S5501, first information is received, in which the first information is used to indicate a plurality of REs in a DD domain.

At step S5502, energy received on each of the REs is determined.

At step S5503, an average energy of a plurality of energies is determined, and the average energy is determined as a measurement result of performing the RRM measurement.

The method for measurement based on OTFS in embodiments of the disclosure may include at least one of steps S5501 to S5503. For example, the step S5501 may be performed as an independent embodiment; and the step S5502 may be performed as an independent embodiment, which is not limited herein. The step S5501 and the step S5502 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

FIG. 6 is a flowchart illustrating an interaction of a method for measurement based on OTFS according to yet another embodiment of the disclosure. As shown in FIG. 6, embodiments of the disclosure relate to a method for measurement based on OTFS, which may be performed by a network device. The method includes the following step S6101.

At step S6101, first information is sent, in which the first information is used to indicate a plurality of REs in a DD domain and to perform RRM measurement on a transmitted reference signal.

The method for measurement based on OTFS related to embodiments of the disclosure may include the step S6101. For example, the step S6101 may be implemented as an independent embodiment, but is not limited herein.

In this implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

In some embodiments of the disclosure, the REs include at least one of: an RE occupied by the reference signal; or an RE for receiving multipath energy of the reference signal in a guard interval of the reference signal.

In some embodiments, the network device may indicate, to the terminal, at least one of the RE occupied by the reference signal or the RE for receiving the multipath energy of the reference signal in the guard interval of the reference signal, to support the terminal in performing the RRM measurement. In this case, the measurement result of the RRM measurement may be, for example, parameters such as RSRP, L1-RSRP, and L1-SINR.

In some embodiments of the disclosure, the REs include at least one of: a semi-statically configured RE; all REs in the DD domain; an RE occupied by the reference signal; all REs in the DD domain located outside a guard interval; an RE located outside a guard interval and adjacent to an RE included in the guard interval; or an RE for receiving multipath energy of the reference signal in a guard interval of the reference signal.

In some embodiments, the network device may indicate, to the terminal, at least one of: the semi-statically configured RE, all REs in the DD domain, the RE occupied by the reference signal, all REs in the DD domain located outside the guard interval, the RE located outside the guard interval and adjacent to an RE included in the guard interval, or the RE for receiving multipath energy of the reference signal in the guard interval of the reference signal, to support the terminal in performing the RRM measurement. In this case, the measurement result of the RRM measurement may be, for example, an RSSI parameter.

In some embodiments of the disclosure, the network device may send second information, in which the second information is used to indicate a measurement value threshold; the first information and the measurement value threshold are used together for performing the RRM measurement on the transmitted reference signal.

In some embodiments of the disclosure, the network device may send third information, in which the third information is used to indicate a target number; the first information and the target number are used together for performing the RRM measurement on the transmitted reference signal.

In some embodiments of the disclosure, the network device may send fourth information, in which the fourth information is used to indicate a target proportion value; the first information and the target proportion value are used together for performing the RRM measurement on the transmitted reference signal.

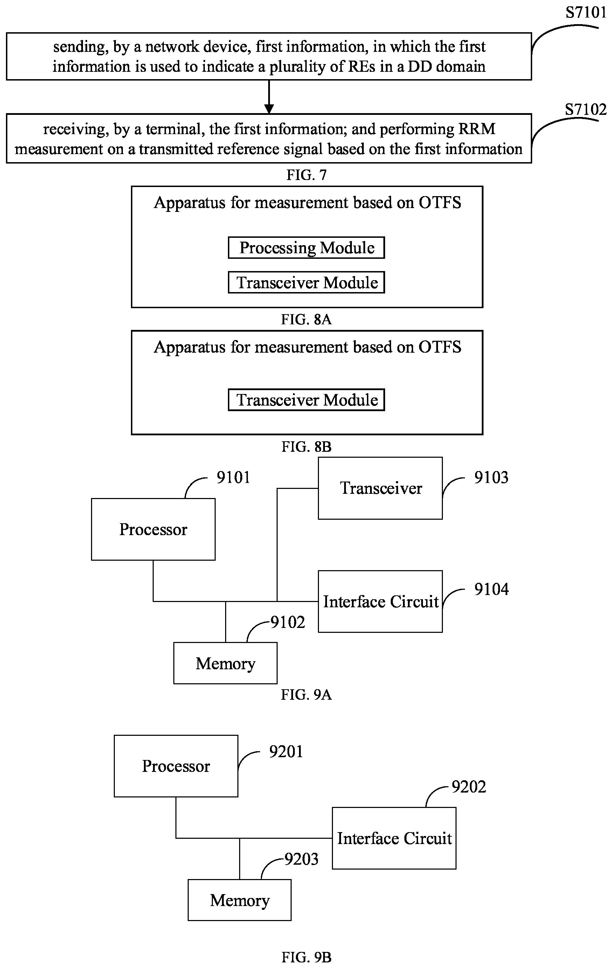

FIG. 7 is a flowchart illustrating an interaction of a method for measurement based on OTFS according to yet another embodiment of the disclosure. As shown in FIG. 7, embodiments of the disclosure relate to a method for measurement based on OTFS, which may be used in a communication system, and the communication system may include a terminal and a network device. The method includes the following steps S7101 to S7102.

At step S7101, a network device sends first information, in which the first information is used to indicate a plurality of REs in a DD domain.

At step S7102, a terminal receives the first information, and performs RRM measurement on a transmitted reference signal based on the first information.

The method for measurement based on OTFS in embodiments of the disclosure may include at least one of steps S7101 to S7102. For example, the step S7101 may be performed as an independent embodiment; and the step S7102 may be performed as an independent embodiment, which is not limited herein. The step S7101 and the step S7202 may be performed as an independent embodiment, which is not limited herein.

In the implementations or embodiments, without conflict, respective steps may be performed independently, arbitrarily combined, or in an exchanged order. Optional implementations or optional examples may be arbitrarily combined, and may also be arbitrarily combined with any steps from other implementations or other embodiments.

The following provides an exemplary introduction to the above method.

Reference may be made to FIG. 2 and FIG. 4 above.

In an optional embodiment: for an RS, since a guard interval is added around the RS, the RS may be power boosted, thus improving accuracy of RRM measurement based on the RS. An EPRE of the RS is boosted by S times relative to a reference channel and/or signal, in which S is a power boosting factor. The reference channel and/or signal may be an SSS, a DMRS of a PBCH, or a data part of a PBCH. The reference channel and/or signal may also refer to a data portion of a PDSCH. The factor S may be configured via a broadcast channel or RRC signaling, or may be calculated based on a number of REs of the RS and a portion (for example, a hatched portion of the guard interval in FIG. 2) in the guard interval that can be used to measure multipath energy.

When measuring parameters such as RSRP, L1-RSRP, and L1-SINR, a UE may detect multipath energy of a channel on REs occupied by RS symbols and REs in a guard interval. For example, in FIG. 2, REs (hatched) in the guard interval that may be used to collect multipath energy of the RS may be used for RRM measurement. When measuring a possible path of h(τ, v), the UE may refer to a criterion to determine whether the path affects RSRP measurement, L1-RSRP measurement, L1-SINR measurement, etc.

A first method is that when a measurement value (an optional example of the candidate measurement value) of a path exceeds a threshold (an optional example of the measurement value threshold), the UE collects energy of the path when measuring parameters such as the RSRP, the L1-RSRP, and the L1-SINR; otherwise, the path is ignored. The threshold may be determined by the UE. For example, if a noise standard deviation is denoted as σ, the threshold may be set to 3σ. Alternatively, the threshold is denoted as cσ, and a base station may configure a parameter c for channel measurement by the UE.

A second method is that the UE measures multipath of a channel, and may collect energy of the channel based only on relatively strong paths for measuring the RSRP, the L1-RSRP, the L1-SINR, etc. For relatively weak paths, because of a low signal-to-noise ratio, considering the relatively weak paths in the RRM measurement may reduce measurement accuracy. The UE may perform the RRM measurement based only on the strongest X (an optional example of the target number) paths. The parameter X may be configured via a broadcast signaling or an RRC signaling, or the parameter X may be based on a UE capability, or the parameter X may be related to UE implementation. When a number x (an optional example of the number of candidate paths) of paths actually detected by the UE is less than X, the UE may also measure the channel based only on the x paths. Alternatively, the UE may measure the RSRP, the L1-RSRP, the L1-SINR, etc., based on a portion of paths. A ratio of a sum of energies of the above portion of multipath to the total channel energy is greater than or equal to Y% (an optional example of the target proportion value). The parameter Y may be predefined, or configured via a broadcast signaling or an RRC signaling. In the RRM measurement, only when a measurement value of a path exceeds the threshold, the UE may further use the above method of processing stronger paths to determine whether the path is used for the RRM measurement. The threshold may be determined by UE implementation. For example, if the noise standard deviation is denoted as σ, the threshold may be set to 3σ. Alternatively, the threshold is denoted as cσ, and the base station may configure a parameter c for channel measurement by the UE. Alternatively, the UE may also use other methods to identify the strongest X paths, or a portion of paths with an energy ratio greater than Y%.

It is assumed that a number of multipath identified by the UE for RRM is K (an optional example of the number of target paths), and the UE obtains the RSRP, the L1-RSRP, the L1-SINR by combining energies of the K multipath, etc. A measured channel gain of a k-th path is denoted as hₖ, and RSRP may be defined as a sum energy (an optional example of the sum energy) of the K paths, i.e., ${\sum }_{k = 0}^{K - 1} {\left|{h}_{k}\right|}^{2}$. Alternatively, RSRP may be defined as an average energy of the K paths, i.e., ${\sum }_{k = 0}^{K - 1} {\left|{h}_{k}\right|}^{2} / K$. Alternatively, RSRP may be defined as the sum energy of the K paths divided by the power boosting factor S (an optional example of the proportional energy between the sum energy and the power boosting factor), i.e., ${\sum }_{k = 0}^{K - 1} {\left|{h}_{k}\right|}^{2} / S$.

To further improve RSRP measurement accuracy, G groups (an optional example of the plurality of signal groups) of RSs for RRM measurement may be transmitted in an OTFS frame, where G>1. Correspondingly, measurement may be performed on each group of RSs respectively, multipath that may be used for RRM measurement is identified, and RRM measurement values may be obtained by combination. The numbers of multipath identified for the RRM measurement for each group of RSs may be equal. The UE may determine the multipath that may be used for the RRM measurement based on this principle. The RSRP may be defined as a sum of channel energies measured from the G groups of RSs, i.e., ${\sum }_{g = 0}^{G - 1} {\sum }_{k = 0}^{K - 1} {\left|{h}_{k}^{g}\right|}^{2} , {\sum }_{g = 0}^{G - 1} {\sum }_{k = 0}^{K - 1} {\left|{h}_{k}^{g}\right|}^{2} / K$, or ${\sum }_{g = 0}^{G - 1} {\sum }_{k = 0}^{K - 1} {\left|{h}_{k}^{g}\right|}^{2} / S$, in which ${h}_{k}^{g}$ is a channel gain of a k-th path measured from a g-th group of RSs. Alternatively, RSRP may be defined as an average of channel energies measured from the G groups of RSs, i.e., ${\sum }_{g = 0}^{G - 1} {\sum }_{k = 0}^{K - 1} {\left|{h}_{k}^{g}\right|}^{2} / G , {\sum }_{g = 0}^{G - 1} {\sum }_{k = 0}^{K - 1} {\left|{h}_{k}^{g}\right|}^{2} / K / G$, or ${\sum }_{g = 0}^{G - 1} {\sum }_{k = 0}^{K - 1} {\left|{h}_{k}^{g}\right|}^{2} / S / G$. Alternatively, an average of channel gains of the same multipath measured from the G groups of RSs may be first calculated, and then RSRP may be defined as a sum of channel energies of each multipath, i.e., ${\sum }_{k = 0}^{K - 1} {\left|{\sum }_{g = 0}^{G - 1} {h}_{k}^{g} / G\right|}^{2}$. Alternatively, the average of channel gains of the same multipath measured from the G groups of RSs may be first calculated, and then RSRP may be defined as an average of channel energies of each multipath, i.e., ${\sum }_{k = 0}^{K - 1} {\left|{\sum }_{g = 0}^{G - 1} {h}_{k}^{g} / G\right|}^{2} / K$. Alternatively, the average of channel gains of the same multipath measured from the G groups of RSs may be first calculated, and then RSRP may be defined as the sum of channel energies of each multipath divided by the power boosting factor S, i.e., ${\sum }_{k = 0}^{K - 1} {\left|{\sum }_{g = 0}^{G - 1} {h}_{k}^{g} / G\right|}^{2} / S$.

For measurement of RSSI, it may be defined as an average of received energies on a set of REs in the DD domain. The above set of REs may be semi-statically configured via broadcast signaling or RRC signaling. Alternatively, the above set of REs may be all REs in the DD domain. Alternatively, the above set of REs may include REs occupied by an RS symbol and REs in a guard interval that may be used to collect multipath energy of the RS. Alternatively, the above set of REs may be all REs in the DD domain located outside the guard interval of the RS. Alternatively, the above set of REs may be REs located outside the guard interval of the RS and adjacent to the guard interval.

FIG. 8A is a block diagram illustrating an apparatus for measurement based on OTFS according to an embodiment of the disclosure. As shown in FIG. 8A, the apparatus for measurement based on OTFS includes: a transceiver module, configured to receive first information, in which the first information is used to indicate a plurality of REs in a DD domain; and a processing module, configured to perform RRM measurement on a transmitted reference signal based on the first information.

Optionally, the transceiver module is configured to perform relevant steps performed by a terminal in any of the above methods, which are not described in detail herein.

Optionally, the apparatus for measurement based on OTFS further includes at least one of a sending module, configured to perform steps related to sending performed by the terminal in any of the above methods, or a receiving module, configured to perform steps related to receiving performed by the terminal in any of the above methods, which are not described in detail herein.

In some embodiments of the disclosure, the REs include at least one of: an RE occupied by a reference signal; or an RE for receiving multipath energy of the reference signal in a guard interval of the reference signal.

In some embodiments of the disclosure, the processing module is configured to: determine, based on the first information, at least one candidate measurement value of at least one candidate path associated with a channel of the transmitted reference signal; determine a target path from the at least one candidate path based on the at least one candidate measurement value; and perform the RRM measurement on the transmitted reference signal based on the target path.

In some embodiments of the disclosure, the processing module is configured to, in a case that a candidate measurement value is greater than or equal to a measurement value threshold, determine a candidate path to which the candidate measurement value belongs as the target path.

In some embodiments of the disclosure, the processing module is configured to sort a plurality of candidate measurement values in descending order, select a target number of candidate measurement values ranked first from a plurality of sorted candidate measurement values, and determine a candidate path to which each of the target number of candidate measurement values belongs as the target path.

In some embodiments of the disclosure, at least one of the plurality of candidate measurement values is greater than or equal to a measurement value threshold.

In some embodiments of the disclosure, the processing module is further configured to determine the measurement value threshold based on a capability of the terminal and/or second information.

In some embodiments of the disclosure, the processing module is further configured to, in a case that a number of candidate measurement values is less than or equal to a target number, determine a candidate path to which each of the candidate measurement values belongs as the target path.

In some embodiments of the disclosure, the processing module is further configured to determine a target number based on a capability of the terminal and/or third information.

In some embodiments of the disclosure, the processing module is further configured to determine a sum value A of a plurality of candidate measurement values that exceed a measurement value threshold, determine a product value A * Y% of the sum value A and a target proportion value Y%, sort the plurality of candidate measurement values in descending order, select a portion of candidate measurement values ranked first from a plurality of sorted candidate measurement values, in which a sum value of the portion of candidate measurement values is greater than or equal to the product value A * Y%, and determine a candidate path to which each candidate measurement value in the portion of candidate measurement values belongs as the target path.

In some embodiments of the disclosure, the processing module is further configured to determine a predefined target proportion value and/or determine the target proportion value based on fourth information.

In some embodiments of the disclosure, the processing module is further configured to determine a plurality of target paths and target measurement values corresponding to the plurality of target paths, and determine, based on the plurality of target measurement values, a measurement result of performing the RRM measurement on the transmitted reference signal.

In some embodiments of the disclosure, each of the target measurement values is a channel gain or a channel energy; and the processing module is further configured to determine a sum energy and/or an average energy of the plurality of target paths and/or a proportional energy between the sum energy and a power boosting factor based on a plurality of channel gains or a plurality of channel energies, and determine the sum energy and/or the average energy and/or the proportional energy as the measurement result.

In some embodiments of the disclosure, the processing module is further configured to determine the power boosting factor based on at least one of: configuration via a broadcast signaling; configuration via a radio resource control (RRC) signaling; or a number of REs occupied by the reference signal and a number of REs for receiving multipath energy of the reference signal in the guard interval of the reference signal.

In some embodiments of the disclosure, a plurality of reference signals exist, different reference signals belong to the same signal group or different signal groups, a number of signal groups is greater than 1, each of the signal groups corresponds to a plurality of target paths, and numbers of target paths corresponding to different signal groups are the same or different; and the processing module is further configured to perform the RRM measurement on the transmitted reference signal based on the plurality of target paths corresponding to each of the signal groups.

In some embodiments of the disclosure, the processing module is further configured to determine a target measurement value of each target path corresponding to each of the signal groups, determine a group measurement result of a corresponding signal group based on a plurality of target measurement values, and determine a measurement result of performing the RRM measurement on the transmitted reference signal based on a plurality of group measurement results.

In some embodiments of the disclosure, the processing module is further configured to determine an intermediate measurement result corresponding to the same target path based on target measurement values of the same target path among a plurality of signal groups, and determine the measurement result of performing the RRM measurement on the transmitted reference signal based on a plurality of intermediate measurement results.

In some embodiments of the disclosure, each of the plurality of target measurement values is a channel gain; and the processing module is further configured to determine an average channel gain based on a plurality of channel gains corresponding to the same target path, and determine the average channel gain as the intermediate measurement result.

In some embodiments of the disclosure, the REs include at least one of: a semi-statically configured RE; all REs in the DD domain; an RE occupied by the reference signal; all REs in the DD domain located outside the guard interval; an RE located outside the guard interval and adjacent to an RE included in the guard interval; or an RE for receiving multipath energy of the reference signal in the guard interval of the reference signal.

In some embodiments of the disclosure, the processing module is configured to determine energy received on each of the REs; determine an average energy of a plurality of energies, and determine the average energy as the measurement result of performing the RRM measurement.

FIG. 8B is a block diagram illustrating an apparatus for measurement based on OTFS according to an embodiment of the disclosure. As shown in FIG. 8B, the apparatus for measurement based on OTFS includes: a transceiver module, configured to send first information, in which the first information is used to indicate a plurality of REs in a DD domain and to perform RRM measurement on a transmitted reference signal.

Optionally, the transceiver module is configured to perform relevant steps performed by a network device in any of the above methods, which are not described in detail herein.

Optionally, the apparatus for measurement based on OTFS further includes at least one of a sending module, configured to perform steps related to sending performed by the network device in any of the above methods, or a receiving module, configured to perform steps related to receiving performed by the network device in any of the above methods, which are not described in detail herein.

In some embodiments of the disclosure, the REs include at least one of: a semi-statically configured RE; all REs in the DD domain; an RE occupied by the reference signal; all REs in the DD domain located outside a guard interval; an RE located outside a guard interval and adjacent to an RE included in the guard interval; or an RE for receiving multipath energy of the reference signal in a guard interval of the reference signal.

In some embodiments of the disclosure, the transceiver module is further configured to send second information, in which the second information is used to indicate a measurement value threshold; the first information and the measurement value threshold are used together for performing the RRM measurement on the transmitted reference signal.

In some embodiments of the disclosure, the transceiver module is further configured to send third information, in which the third information is used to indicate a target number; the first information and the target number are used together for performing the RRM measurement on the transmitted reference signal.

In some embodiments of the disclosure, the transceiver module is further configured to send fourth information, in which the fourth information is used to indicate a target proportion value; the first information and the target proportion value are used together for performing the RRM measurement on the transmitted reference signal.

It should be understood that a division of units or modules in the above apparatus is only a division of logical functions. In actual implementations, they may be wholly or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of part of or all of units or modules may be implemented by designing the hardware circuit. The hardware circuit may be understood as one or more processors. For example, in an implementation, the hardware circuit is an application specific integrated circuit (ASIC). The functions of part of or all of units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of part of or all of units or modules. All units or modules of the above apparatus may be wholly implemented in the form of software called by the processor, or wholly implemented in the form of the hardware circuit, or partially implemented in the form of software called by the processor and the remaining part implemented in the form of the hardware circuit.

As shown in FIG. 9A, FIG. 9A is a block diagram illustrating a communication device according to an embodiment of the disclosure. The communication device 9100 may include one or more processors 9101. The processor 9101 may be a general-purpose processor or a special-purpose processor, for example, a baseband processor or a central processing unit. The baseband processor may be used to process communication protocols and communication data, and the central processing unit may be used to control communication devices (such as a base station, a baseband chip, a terminal, a terminal chip, a DU or a CU, etc.), execute programs, and process program data. The processor 9101 is configured to execute instructions to cause the communication device 9100 to perform any one of the above methods.

Optionally, the communication device 9100 further includes one or more memories 9102 for storing instructions. Optionally, all or some of the memories 9102 may also be located outside the communication device 9100.

In some embodiments, the communication device 9100 further includes one or more transceivers 9103. When the communication device 9100 includes one or more transceivers 9103, the transceiver 9103 performs the communication steps such as sending and/or receiving in the above method, and the processor 9101 performs other steps.

In some embodiments, the transceiver may include a receiver and a transmitter, which may be separate or integrated together. In an example, terms such as transceiver, transceiver unit, transceiving circuit, etc. may be used interchangeably; terms such as transmitter, transmission unit, transmitting circuit, etc. may be used interchangeably; and terms such as receiver, reception unit, receiving circuit, etc. may be used interchangeably.

In some embodiments, the communication device 9100 further includes one or more interface circuits 9104. In an example, the interface circuit 9104 is connected to the memory 9102. The interface circuit 9104 may be configured to receive signals from the memory 9102 or other devices, and may be configured to send signals to the memory 9102 or other devices. For example, the interface circuit 9104 may read instructions stored in the memory 9102 and send the instructions to the processor 9101.

The communication device 9100 in the above embodiments may be a network device or a terminal, but a scope of the communication device 9100 in the disclosure is not limited to this, and a structure of the communication device 9100 may not be limited by FIG. 9A. The communication device may be an independent device or a part of a larger device. For example, the communication device may be: 1) an independent IC, or a chip, or a chip system or a subsystem; 2) a collection including one or more IC, In an example, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 9B is a block diagram of a chip according to an embodiment of the disclosure. For a case where the communication device 9100 may be a chip or a chip system, reference may be made to the block diagram of the chip 9200 shown in FIG. 9B, but not limited to this.

The chip 9200 includes one or more processors 9201. The processor 9201 is configured to invoke instructions to cause the chip 9200 to implement any one of the above methods.

In some embodiments, the chip 9200 further includes one or more interface circuits 9202. The interface circuit 9202 is connected to a memory 9203. The interface circuit 9202 may be configured to receive signals from the memory 9203 or other devices, and may be configured to send signals to the memory 9203 or other devices. For example, the interface circuit 9202 may read the instructions stored in the memory 9203 and send the instructions to the processor 9201. In an example, terms such as interface circuit, interface, transceiver pin, transceiver, etc. may be used interchangeably.

In some embodiments, the chip 9200 further includes one or more memories 9203 for storing instructions. In an example, all or some of the memories 9203 may be located outside the chip 9200.

The disclosure also provides a storage medium for storing instructions. When the instructions are running on the communication device 9100, the communication device 9100 is caused to implement any one of the above methods. In an example, the above storage medium is an electronic storage medium. In an example, the above storage medium is a computer-readable storage medium, which is not limited to this, and the above storage medium may also be a storage medium readable by other devices. In an example, the above storage medium may be a non-transitory storage medium, which is not limited to this, and the above storage medium may also be a transitory storage medium.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed. For example, the processor is a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of part of or all of units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

The disclosure also provides a program product. When the program product is executed by the communication device 9100, the communication device 9100 is caused to implement any one of the above methods. In an example, the above program product is a computer program product.

The disclosure also provides a computer program. When the computer program is running on a computer, the computer is caused to implement any one of the above methods.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The available medium may be a magnetic medium (such as a floppy disk, a hard disk and a magnetic tape), an optical medium (such as a digital video disk (DVD)), a semiconductor medium (such as a solid state disk (SSD)), or the like.

Those skilled in the art may realize that the units and algorithmic steps of the various examples described in the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

Those skilled in the related art may clearly understand that, for the convenience and conciseness of description, for a specific operating process of a system, an apparatus and a unit described above, reference may be made to a corresponding process in the above method embodiments, which is not repeated herein.

The above implementations are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be subject to the scope of protection of the stated claims.

## Claims

1. A method for measurement based on orthogonal time frequency space (OTFS), performed by a terminal, comprising:
receiving first information, wherein the first information is used to indicate a plurality of resource elements (REs) in a delay Doppler (DD) domain; and
performing radio resource management (RRM) measurement on a transmitted reference signal based on the first information.

2. The method according to claim 1, wherein the REs comprise at least one of:
an RE occupied by the reference signal; or
an RE for receiving multipath energy of the reference signal in a guard interval of the reference signal.

3. The method according to claim 1 or 2, wherein performing the RRM measurement on the transmitted reference signal based on the first information comprises:
determining, based on the first information, at least one candidate measurement value of at least one candidate path associated with a channel of the transmitted reference signal;
determining a target path from the at least one candidate path based on the at least one candidate measurement value; and
performing the RRM measurement on the transmitted reference signal based on the target path.

4. The method according to claim 3, wherein determining the target path from the at least one candidate path based on the at least one candidate measurement value comprises:
in a case that a candidate measurement value is greater than or equal to a measurement value threshold, determining a candidate path to which the candidate measurement value belongs as the target path.

5. The method according to claim 3, wherein determining, based on a plurality of candidate measurement values, the target path from a plurality of candidate paths comprises:
sorting the plurality of candidate measurement values in descending order;
selecting a target number of candidate measurement values ranked first from a sorted plurality of candidate measurement values; and
determining a candidate path to which each of the target number of candidate measurement values belongs as the target path.

6. The method according to claim 5, wherein at least one of the plurality of candidate measurement values is greater than or equal to a measurement value threshold.

7. The method according to any one of claims 4 to 6, further comprising:
determining the measurement value threshold based on a capability of the terminal and/or second information.

8. The method according to claim 3, wherein determining, based on a plurality of candidate measurement values, the target path from a plurality of candidate paths comprises:
in a case that a number of the plurality of candidate measurement values is less than or equal to a target number, determining a candidate path to which each of the candidate measurement values belongs as the target path.

9. The method according to any one of claims 5 to 8, further comprising:
determining the target number based on a capability of the terminal and/or third information.

10. The method according to claim 3, wherein determining, based on a plurality of candidate measurement values, the target path from a plurality of candidate paths comprises:
determining a sum value A of a plurality of candidate measurement values that exceed a measurement value threshold;
determining a product value A * Y% of the sum value A and a target proportion value Y%;
sorting the plurality of candidate measurement values in descending order, and selecting a portion of candidate measurement values ranked first from a sorted plurality of candidate measurement values, wherein a sum value of the portion of candidate measurement values is greater than or equal to the product value A * Y%; and
determining a candidate path to which each candidate measurement value in the portion of candidate measurement values belongs as the target path.

11. The method according to claim 10, further comprising:
determining a predefined target proportion value and/or determining the target proportion value based on fourth information.

12. The method according to any one of claims 3 to 11, wherein performing the RRM measurement on the transmitted reference signal based on a plurality of target paths comprises:
determining the plurality of target paths and a plurality of target measurement values corresponding to the plurality of target paths; and
determining, based on the plurality of target measurement values, a measurement result of performing the RRM measurement on the transmitted reference signal.

13. The method according to claim 12, wherein each of the plurality of target measurement values is a channel gain or a channel energy; and
determining, based on the plurality of target measurement values, the measurement result of performing the RRM measurement on the transmitted reference signal comprises:
determining, based on a plurality of channel gains or a plurality of channel energies, a sum energy and/or an average energy of the plurality of target paths and/or a proportional energy between the sum energy and a power boosting factor; and
determining the sum energy and/or the average energy and/or the proportional energy as the measurement result.

14. The method according to claim 13, wherein the power boosting factor is determined based on at least one of:
configuration via a broadcast signaling;
configuration via a radio resource control (RRC) signaling; or
a number of REs occupied by the reference signal and a number of REs for receiving multipath energy of the reference signal in a guard interval of the reference signal.

15. The method according to any one of claims 3 to 11, wherein a plurality of reference signals exist, different reference signals belong to the same signal group or different signal groups, a number of signal groups is greater than 1, each of the signal groups corresponds to a plurality of target paths, and numbers of target paths corresponding to different signal groups are the same or different; and
performing the RRM measurement on the transmitted reference signal based on the plurality of target paths comprises:
performing the RRM measurement on the transmitted reference signal based on the plurality of target paths corresponding to each of the signal groups.

16. The method according to claim 15, wherein performing the RRM measurement on the transmitted reference signal based on the plurality of target paths corresponding to each of the signal groups comprises:
determining a target measurement value of each target path corresponding to each of the signal groups;
determining a group measurement result of a corresponding signal group based on a plurality of target measurement values; and
determining a measurement result of performing the RRM measurement on the transmitted reference signal based on the plurality of group measurement results.

17. The method according to claim 15, wherein performing the RRM measurement on the transmitted reference signal based on the plurality of target paths corresponding to each of the signal groups comprises:
determining an intermediate measurement result corresponding to the same target path based on a plurality of target measurement values of the same target path among the plurality of signal groups; and
determining a measurement result of performing the RRM measurement on the transmitted reference signal based on a plurality of intermediate measurement results.

18. The method according to claim 17, wherein each of the plurality of target measurement values is a channel gain; and
determining the intermediate measurement result corresponding to the same target path based on the target measurement values of the same target path among the plurality of signal groups comprises:
determining an average channel gain based on a plurality of channel gains corresponding to the same target path, and determining the average channel gain as the intermediate measurement result.

19. The method according to claim 1, wherein the REs comprise at least one of:
a semi-statically configured RE;
all REs in the DD domain;
an RE occupied by the reference signal;
all REs in the DD domain located outside a guard interval;
an RE located outside a guard interval and adjacent to an RE comprised in the guard interval; or
an RE for receiving multipath energy of the reference signal in a guard interval of the reference signal.

20. The method according to claim 1 or 19, wherein performing RRM measurement on the transmitted reference signal based on the first information comprises:
determining energy received on each of the REs; and
determining an average energy of a plurality of energies, and determining the average energy as a measurement result of performing the RRM measurement.

21. A method for measurement based on orthogonal time frequency space (OTFS), performed by a network device, comprising:
sending first information, wherein the first information is used to indicate a plurality of resource elements (REs) in a delay Doppler (DD) domain and to perform radio resource management (RRM) measurement on a transmitted reference signal.

22. The method according to claim 21, wherein the REs comprise at least one of:
a semi-statically configured RE;
all REs in the DD domain;
an RE occupied by the reference signal;
all REs in the DD domain located outside a guard interval;
an RE located outside a guard interval and adjacent to an RE comprised in the guard interval;
or
an RE for receiving multipath energy of the reference signal in a guard interval of the reference signal.

23. The method according to claim 21 or 22, further comprising:
sending second information, wherein the second information is used to indicate a measurement value threshold; the first information and the measurement value threshold are used together for performing the RRM measurement on the transmitted reference signal.

24. The method according to claim 21 or 22, further comprising:
sending third information, wherein the third information is used to indicate a target number; the first information and the target number are used together for performing the RRM measurement on the transmitted reference signal.

25. The method according to claim 21 or 22, further comprising:
sending fourth information, wherein the fourth information is used to indicate a target proportion value; the first information and the target proportion value are used together for performing the RRM measurement on the transmitted reference signal.

26. A method for measurement based on orthogonal time frequency space (OTFS), comprising:
sending, by a network device, first information, wherein the first information is used to indicate a plurality of resource elements (REs) in a delay Doppler (DD) domain; and
receiving, by a terminal, the first information; and performing, by the terminal, radio resource management (RRM) measurement on a transmitted reference signal based on the first information.

27. An apparatus for measurement based on orthogonal time frequency space (OTFS), comprising:
a transceiver module, configured to receive first information, wherein the first information is used to indicate a plurality of resource elements (REs) in a delay Doppler (DD) domain; and
a processing module, configured to perform radio resource management (RRM) measurement on a transmitted reference signal based on the first information.

28. An apparatus for measurement based on orthogonal time frequency space (OTFS), comprising:
a transceiver module, configured to send first information, wherein the first information is used to indicate a plurality of resource elements (REs) in a delay Doppler (DD) domain and to perform radio resource management (RRM) measurement on a transmitted reference signal.

29. A communication device, comprising:
one or more processors;
wherein the one or more processors are configured to invoke instructions to cause the communication device to perform the method according to any one of claims 1 to 26.

30. A communication system, comprising a terminal, configured to perform the method according to any one of claims 1 to 20, and a network device, configured to perform the method according to any one of claims 21 to 25.

31. A storage medium storing instructions, wherein the instructions, when executed on a communication device, cause a communication device to perform the method according to any one of claims 1 to 26.
